Europäisches Patentamt

(19) European Patent Office

Office européen des brevets

(11) Veröffentlichungsnummer : **0 151 258**
**B1**

(12) **EUROPÄISCHE PATENTSCHRIFT**

(45) Veröffentlichungstag der Patentschrift :
25.05.88

(21) Anmeldenummer : 84114897.6

(22) Anmeldetag : 07.12.84

(51) Int. Cl.⁴ : **G 11 B 23/03**, G 11 B 33/14,
G 11 B 17/038

(54) Geteiltes Gehäuse für einen Magnetplattenspeicher mit umlaufendem Dichtungsring.

(30) Priorität : 07.02.84 DE 3404241

(43) Veröffentlichungstag der Anmeldung :
14.08.85 Patentblatt 85/33

(45) Bekanntmachung des Hinweises auf die Patenterteilung : 25.05.88 Patentblatt 88/21

(84) Benannte Vertragsstaaten :
AT CH DE FR GB IT LI NL

(56) Entgegenhaltungen :
EP-A- 0 054 665
DE-A- 2 737 333
FR-A- 2 306 503
GB-A- 2 092 834
GB-A- 2 107 107
US-A- 3 465 875
US-A- 4 307 425
PATENTS ABSTRACTS OF JAPAN, Band 7, Nr. 206,
10. September 1983, Seite 141P222; & JP - A - 58 102
364 (FUJITSU K .K.) 17.06.1983
JAPAN TELECOMMUNICATIONS REVIEW, Band 24,
Nr. 2, April 1982, Seiten 163-169, Tokyo, JP; R.
KANEKO u.a.: "Compact, high recording density
magnetic disk storage"
IBM TECHNICAL DISCLOSURE BULLETIN, Band 13,
Nr. 6, November 1970, Seite 1559, New York, US; E.
MAX u.a.: "Manufacturing a magnetic record carrier"

(73) Patentinhaber : Siemens Aktiengesellschaft Berlin
und München
Wittelsbacherplatz 2
D-8000 München 2 (DE)

(72) Erfinder : Biermeier, Johann, Dipl.-Ing. (FH)
Joergstrasse 82
D-8000 München 21 (DE)
Erfinder : Obermayer, Heinz
Schulweg 6a
D-8082 Grafrath (DE)

## Beschreibung

Die Erfindung bezieht sich auf ein Gehäuse für einen Magnetplattenspeicher gemäß dem Oberbegriff des Hauptanspruches.

Die technische Entwicklung bei Magnetplattenspeichern geht weiterhin ständig zu höheren Speicherkapazitäten, einerseits sowohl hinsichtlich der Spurdichte und der Bitdichte als Charakteristik für die Speicherkapazität pro Plattenfläche, als auch hinsichtlich des mechanischen Aufbaus, um möglichst viele Magnetplatten in einem vorgegebenen Einbauraum unterzubringen. Ein Beispiel dafür ist der sogenannte 5 1/4 Zoll Festplattenspeicher, dessen Magnetplatten nach Industriestandard einen Außendurchmesser von 130 mm und einen Innendurchmesser von 40 mm aufweisen. Für diesen Speichertyp hat sich als Standard, in Analogie zu den Abmessungen von konkurrierenden Floppy Disk Laufwerken, ein Einbauraum mit einer Einbauhöhe von 82,5 mm und einer Grundfläche von 146 mm × 203 mm als Einheitsgröße herausgebildet, der für das gesamte Gerät einschließlich des Gehäuses und der zugehörigen Elektronik zur Verfügung steht.

In dem Bestreben möglichst viele Magnetplatten in diesem vorgegebenen Einbauraum unterzubringen, ist es gelungen, den Antriebsmotor für den Plattenstapel soweit zu miniaturisieren, daß er in die Nabe des Plattenstapels eingebaut werden kann. Mit der dadurch gewonnen nutzbaren Einbauhöhe sind, nach heutigen Gegebenheiten der Größe der kombinierten Magnetköpfe und der Plattendicke, Plattenstapel möglich geworden, die bis zu acht Magnetplatten übereinander gestapelt enthalten. Die restliche Einbauhöhe wird für das Gehäuse und die Geräteelektronik benötigt.

Der anzustrebende kompakte Aufbau und die gewünschte hohe Aufzeichnungsdichte auf den Magnetplatten bedingen besondere konstruktive Maßnahmen, um vertretbare Fertigungskosten bei ausreichender Betriebssicherheit, aber auch eine gewünschte Zugänglichkeit des Plattenstapels und der zugehörigen Magnetkopfpositioniereinrichtung bei der Montage und im Testbetrieb zu erreichen.

Im vorliegenden Fall ist dazu das Gehäuse des Magnetplattenspeichers längs einer zu den Achsen des Plattenstapels und der Magnetkopfpositioniereinrichtung parallelen Trennebene derart in eine wannenförmige Tragschale und eine Abdeckung unterteilt, daß beide Lagerstellen für den Plattenstapel eben noch innerhalb von Seitenwänden der Tragschale liegen. Um jedoch die Einbautiefe der Magnetkopfpositioniereinrichtung in die Tragschale möglichst klein zu halten, ist die Trennebene um einen Winkel gegen die Stirnwand der Tragschale geneigt. Die Magnetkopfpositioniereinrichtung, die als Drehpositionierer ausgebildet ist, ist auf der Innenseite der Stirnwand der Tragschale befestigt und wird als fertig getestete Baugruppe im Gehäuse montiert. Dasselbe gilt für den Plattenstapel. Um dies zu ermöglichen, ist in einer der Seitenwände der Tragschale ein zum Rand hin geöffneter Schlitz vorgesehen, in den der zugeordnete Spindelzapfen des Plattenstapels beim Montieren eingeschoben wird. An der gegenüberliegenden Stirnwand der Tragschale ist der andere Spindelzapfen durch eine durch die Gehäusewandung hindurchreichende Verschraubung festgelegt.

Dieser konstruktive Aufbau ermöglicht eine stufenweise Montage der Baugruppen und erlaubt — Staubfreiheit vorausgesetzt — einen Testbetrieb des Magnetplattenspeichers auch bei abgenommener Abdeckung und zugleich eine weitgehende Zugänglichkeit der einzelnen Baugruppen in diesem Zustand.

Die Betriebssicherheit von Magnetplattenspeichern hängt weitgehend auch von einer hermetischen Abdichtung des Gehäuseinnenraumes, in dem der Plattenstapel umläuft, gegen störende Einflüsse der Umgebung ab. Wegen der Empfindlichkeit der Oberfläche der Magnetplatten und insbesondere der geringen Abstände mit denen die Magnetköpfe des Drehpositionierers im Betrieb über die Oberflächen der zugeordneten Magnetplatten fliegen, ist es insbesondere unbedingt erforderlich, jede Staubeinwirkung von außen zu vermeiden.

Der vorliegenden Erfindung liegt daher die Aufgabe zugrunde, den Gehäuseaufbau so auszubilden, daß bei fertigungstechnisch geringem Aufwand eine einwandfreie Gehäuseabdichtung in der Trennebene zwischen Tragschale und Abdeckung erreicht wird. Dabei ist es insbesondere wesentlich, auch die schlitzartig ausgebildete Lagerstelle in der einen Seitenwand der Tragschale so in die Dichtung einzubeziehen, daß möglichst jede Undichtigkeit vermieden wird.

Diese Aufgabe wird gemäß der vorliegenden Erfindung bei dem eingangs genannten Gehäuse für einen Magnetplattenspeicher mit den im Kennzeichen des Patentanspruches 1 beschriebenen Merkmalen gelöst.

Diese Lösung hat den besonderen Vorteil, daß insbesondere auch der kritische Bereich an der schlitzartig ausgebildeten Lagerstelle des Plattenstapels, die die an sich geschlossene Trennebene unterbricht, ohne Dichtungsverluste erfaßt ist. Mit anderen Worten wird mit einer einteiligen Dichtung das Gehäuse in zwei Ebenen und um die im Schnittpunkt dieser Ebenen liegende Kante herum zuverlässig abgedichtet. Diese umlaufende Dichtung wird vorzugsweise als ein Spritzgußformteil aus Silikonkunststoff hergestellt. Einerseits werden dabei die Eigenschaften dieses Werkstoffes ausgenutzt, hier neben der gewünschten Elastizität auch eine hohe Materialbeständigkeit. Im vorliegenden Fall wird auf letzteres Merkmal großer Wert gelegt, um zu vermeiden, daß durch das Dichtungsmaterial selbst Verunreinigungen in das Gehäuseinnere getragen werden. Das Herstellungsverfahren andererseits gewährleistet, daß die Knicklinie am Schnittpunkt zum Ansatzstück sauber und scharfkantig ausgebildet ist. Gerade eine solche Formgebung ist aber notwendig, um im Bereich der Öffnung des Schlitzes in der einen Seitenwand der Tragschale eine eindeutige Abdichtung zu schaffen.

Gemäß einer anderen Weiterbildung der Erfindung ist die Dichtfläche in der Trennebene zwischen Abdeckung und Tragschale als Stufe ausgebildet, wobei durch einen innenliegenden Ansatz ein metallischer Kontakt zwischen Abdeckung und Tragschale zum Abschirmen von hochfrequenten Störsignalen gegeben und eine außenliegende Nut zum Aufnehmen des Dichtungsringes vorgesehen ist. Diese Ausgestaltung der Dichtfläche erfüllt gleichzeitig zwei Forderungen, nämlich der mechanischen Abdichtung und der elektrischen Abschirmung des Gehäuseinneren. Weitere Vorteile der erfindungsgemäßen Lösung ergeben sich aus den übrigen Unteransprüchen.

Im folgenden wird ein Ausführungsbeispiel der Erfindung anhand der Zeichnung näher beschrieben. Dabei zeigt :

Fig. 1 in einer Ansicht ein Gehäuse für einen Magnetplattenspeicher mit einer wannenförmigen Tragschale die den Magnetplattenstapel aufnimmt und mit einer darauf aufgesetzten Abdeckung, die teilweise aufgeschnitten dargestellt ist, um eine in der Trennebene zwischen Tragschale und Abdeckung umlaufende Dichtung zu zeigen,

Fig. 2 einen Schnitt durch das Gehäuse längs einer in Fig. 1 dargestellten Schnittlinie II ... II und

Fig. 3 in perspektivischer Darstellung als Einzelteil die in Fig. 1 dargestellte, zwischen Tragschale und Abdeckung umlaufende Dichtung.

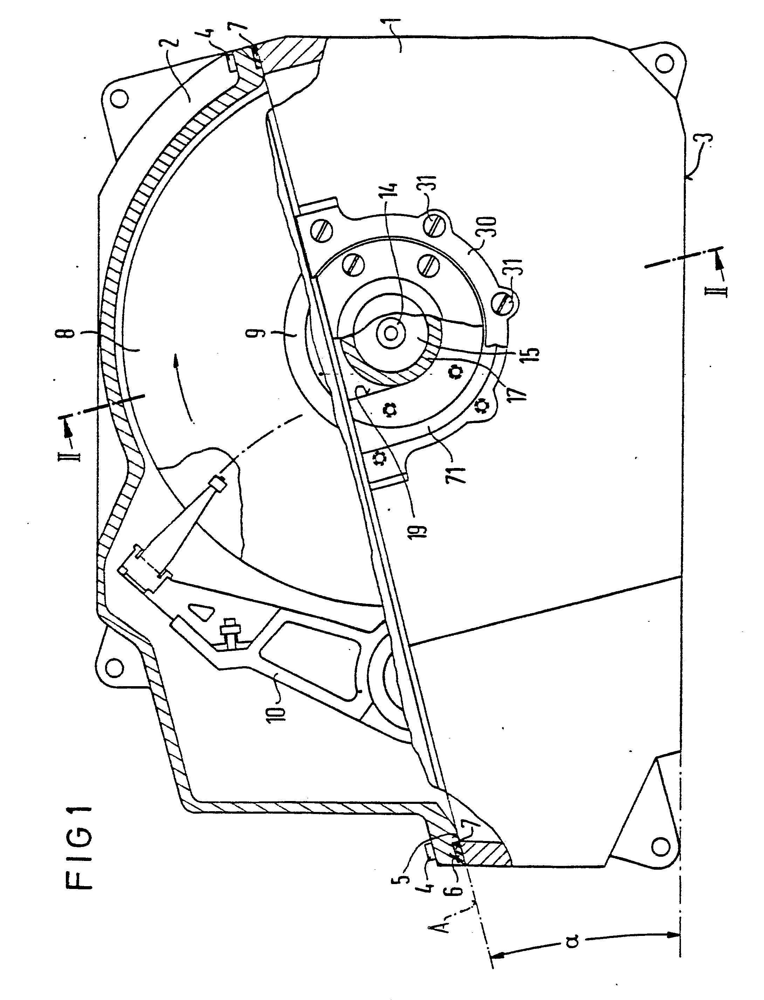

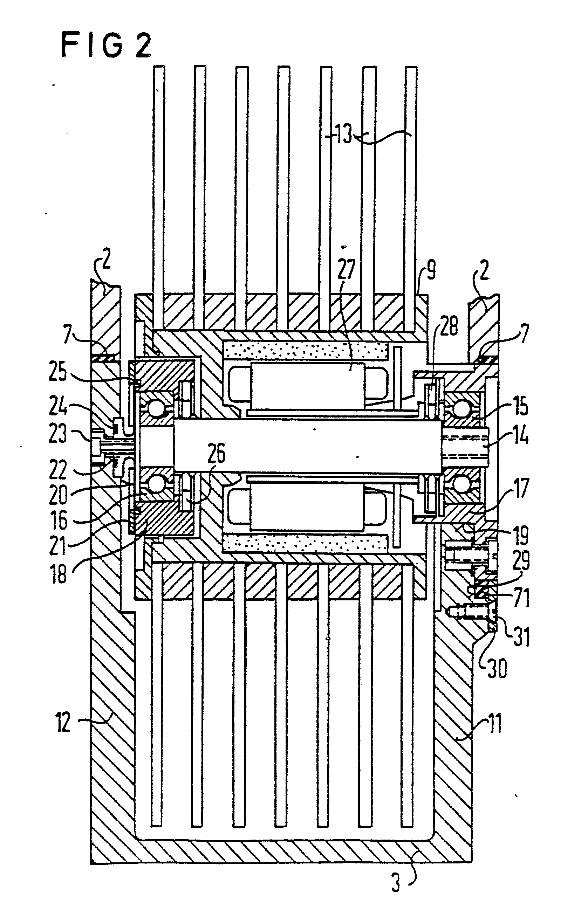

In Fig. 1 ist ein Gehäuse gezeigt, das längs einer diagonal verlaufenden Trennebene A in eine Tragschale 1 und eine Abdeckung 2 unterteilt ist und in Fig. 2 ist ein entsprechender Schnitt durch das Gehäuse dargestellt. Beide Figuren werden daher im folgenden gemeinsam erläutert.

Das Gehäuse selbst ist ein im wesentlichen rechteckförmiger Kasten, dessen tragendes Element die Tragschale 1 ist. Die Abdeckung 2 sitzt in der genannten Trennebene A, die zu einer Stirnfläche 3 der Tragschale 1 um einen Winkel α geneigt ist, auf dieser Tragschale auf und ist mit dieser durch Gehäuseschrauben 4 lösbar verbunden. Die Verbindung zwischen Abdeckung und Tragschale soll staubdicht sein und zugleich eine ausreichende Abschirmung gegen hochfrequente Störsignale schaffen. Zu diesem Zweck ist der in der Trennebene A liegende Rand der Abdeckung 2 als Stufe ausgebildet. Mit einem innenliegenden, vorspringenden Ansatz 5 ist eine plane metallische Kontaktfläche geschaffen, die direkt auf dem Rand Tragschale 1 aufliegt. Durch diesen Ansatz 5 ergibt sich eine außenliegende Fase 6 im Rand der Abdeckung 2, in die eine umlaufende Dichtung 7 eingelegt ist. Beim Aufschrauben der Abdeckung 2 auf die Tragschale 1 legt sich der Ansatz 5 an den Rand der Tragschale 1 an und sorgt damit für die hochfrequente Abschirmung, zugleich wird der Dichtungsring 7 in der vom Rand der Tragschale 1 und der Fase 6 gebildeten Nut eingequetscht und damit die gewünschte staubfreie Abdichtung erzielt.

Die Abdeckung 2 ist in Fig. 1 teilweise aufgeschnitten dargestellt, um die beschriebene Lösung des Dichtproblems, aber auch das Innere des Magnetplattenspeichers und damit seine wesentlichen Baueinheiten zu zeigen. Durch den Teilschnitt ist ein Plattenstapel 8 sichtbar, der — wie schematisch angedeutet ist — auf einer Nabe 9 angeordnet ist und in Pfeilrichtung umläuft. Seitlich neben dem Plattenstapel ist als Magnetkopfpositioniereinrichtung ein Drehpositionierer 10 angeordnet, der in Betriebsposition gezeigt ist.

Der in Fig. 1 gewählte Teilschnitt zeigt auch die Bedeutung der gewählten Lage und Neigung der Trennebene A. Diese ist so gelegt, daß alle konstruktiv wesentlichen Gehäusefunktionen in der Tragschale 1 vereinigt sind, das gilt insbesondere für die beidseitige Lagerung des Plattenstapels 8, aber auch die Befestigung des Drehpositionierers 10. Andererseits ist die Trennebene A möglichst nahe an und parallel zur Achse des Plattenstapels 8 gelegt und um den Winkel α geneigt, so daß die Einbautiefe für den Drehpositionierer 10 hinsichtlich Fertigung und Montage optimiert ist. Mit diesem Aufbauprinzip und der gewählten Gehäuseteilung wird eine gute Zugänglichkeit der funktionsbestimmenden Bauteile des Magnetplattenspeichers erreicht.

Dies wird nun im einzelnen anhand des in Fig. 2 gezeigten Schnittes durch das Gehäuses näher erläutert. Dieser Schnitt ist aus Gründen der Übersichtlichkeit im Maßstab vergrößert und stellt insbesondere den Aufbau des Plattenstapels 8 mit der beidseitigen Lagerung in den Seitenwänden der Tragschale 1 heraus.

Fig. 2 verdeutlicht die wannenförmige Gestalt der Tragschale 1 mit zwei zur Stirnwand 3 senkrecht stehenden Seitenteilen, einem Tragschalendoden 11 und einer Tragschalenoberseite 12. Diese Bezeichnungen weisen darauf hin, daß die eigentliche Einbaulage des Magnetplattenspeichers dem Querformat des in Fig. 2 gezeigten Schnittes entspricht.

In jedem dieser Seitenteile liegt eine Lagerstelle für den Plattenstapel 8. Dieser wird im vorliegenden Fall als eine fertig vormontierte Einheit angesehen, es erscheint daher hier nicht notwendig, seinen konstruktiven Aufbau in allen Einzelheiten zu erläutern. Zusammenfassend sei nur festgestellt, daß eine Mehrzahl von Speicherplatten 13 in gleichmäßigen Abständen auf der Nabe 9 des Plattenstapels festgespannt sind. Die Nabe 9 ist als Hohlkörper ausgebildet und mit einer Spindel 14 fest verbunden, die an beiden Enden Spindelzapfen aufweist, die Kugellager 15 bzw. 16 mit Festsitz tragen. Auf die Außenringe dieser Kugellager ist jeweils eine Lagerbuchse 17 bzw. 18 mit Festsitz aufgepreßt.

Der Tragschalendoden 11 weist als Aufnahmefläche für die erste Lagerbuchse 17 einen senkrecht zum Rand der Tragschale 1 stehenden und nach dieser Seite hin geöffneten Schlitz 19 auf,

dessen nach innen gerichteter Grund als 180° - Rundung ausgeführt ist. Die dieser Lagerstelle zugeordnete erste Lagerbuchse 17 hat dementsprechend eine ebensolche Zentrierfläche und ist parallel zum Rand der Tragschale 1 abgeschnitten.

Die auf der gegenüberliegenden Seite des Plattenstapels 8 angeordnete zweite Lagerbuchse 18 trägt auf ihrer nach außen weisenden Stirnfläche eine Membranfeder 20, die in einen Zentrieransatz in der Stirnfläche dieser Lagerbuchse eingesetzt und mit Hilfe eines Druckringes 21 kraftschlüssig an der Stirnfläche der Lagerbuchse festgelegt ist. Das federnde Element der Membranfeder 20 besteht aus einer runden Federscheibe, die eine zentral angeordnete, nach außen weisende Kopfplatte 22 mit einer Zentralbohrung trägt. Diese Kopfplatte 22 ist mit Hilfe einer von außen in eine koaxiale Bohrung in der Tragschalenoberseite 12 eingelegten Befestigungsschraube 23 an der Gehäuseinnenwandung festgelegt. Zur Abdichtung dieser Lagerstelle ist eine Dichtungsscheibe 24 vorgesehen, die zwischen die Kopfplatte 22 und die Gehäuseinnenseite eingelegt ist.

Um zu vermeiden, daß vom Kugellager 16 stammende Verunreinigungen in das Gehäuseinnere gelangen, ist zwischen die Membranfeder 20 und die zweite Lagerbuchse 18 eine weitere Dichtung 25 eingelegt und neben dem Kugellager am inneren Ende der zweiten Lagerbuchse 18 eine magnetische Flüssigkeitsdichtung 26 angeordnet.

Im Hohlkörper der Nabe 9 ist ein Innenmotor 27 zum Antrieb des Plattenstapels 8 angeordnet, der mit seinem Stator am inneren Ende der ersten Lagerbuchse 17 festgelegt ist. Eine zweite magnetische Flüssigkeitsdichtung 28 ist, dem ersten Kugellager 15 unmittelbar benachbart, ebenso in dieser ersten Lagerbuchse 17 festgelegt und dichtet diese Lagerstelle nach innen ab. Eine unmittelbare Abdichtung des Kugellagers auf der nach außen weisenden Seite ist nicht erforderlich, da die Lagerstelle hier durch den Tragschalenboden 11 hindurchgeführt ist.

Jedoch reicht die rein metallische Dichtung zwischen der ersten Lagerbuchse 17 und der Wandung im Schlitz 19 des Tragschalenbodens 11 nicht aus, um zuverlässig eine staubfreie Abdichtung im Bereich dieser Lagerstelle zu schaffen. Aus diesem Grunde ist, wie aus Fig. 1 am besten erkennbar, in der Außenfläche des Tragschalenbodens 11 konzentrisch zum Umfang der ersten Lagerbuchse 17 eine Eindrehung 29 vorgesehen, in die ein Ansatzstück 71 des Dichtungsringes 7 eingelegt ist.

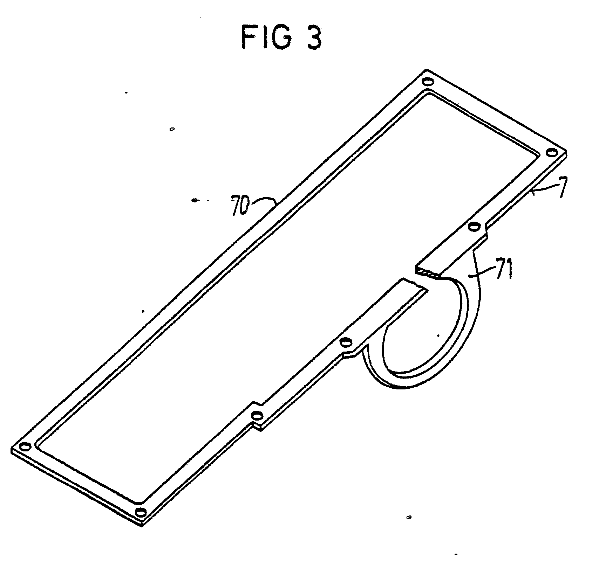

Da Fig. 1 und 2 die eigentliche Form des Dichtungsringes 7 mit dem rechtwinklig dazu angesetzten Ansatzstück 71 noch nicht im gewünschten Maße eindeutig erkennen lassen, ist er als Einzelelement in Fig. 3 nochmals in perspektivischer Darstellung gezeigt. Aus dieser Darstellung läßt sich nun eindeutig der im eingebauten Zustand in der Trennebene A umlaufende Ring 70 erkennen, der zwischen Tragschale 1 und Abdeckung 2 eingequetscht wird. Im rechten Winkel davon abstehend ist das Ansatzstück 71 angesetzt. Dieses in zwei Ebenen wirkende Dichtungselement ist als Spritzgußformteil vorzugsweise aus Silikonkunststoff hergestellt. Das Herstellungsverfahren ermöglicht eine exakte Formgebung, die insbesondere im Bereich der Schnittkante zwischen dem umlaufenden Ring 70 und dem Ansatzstück 71 einen genauen, scharfkantigen Winkel erlaubt, der funktionsmäßig eine sichere, staubfreie Abdichtung längs dieser Knicklinie gewährleistet. Die Wahl des Dichtungswerkstoffes ist durch zwei Forderungen im wesentlichen bestimmt, das Dichtungsmaterial soll auf lange Zeit unverändert elastisch und zersetzungsfrei bleiben. Vor allem letzteres Merkmal ist hier von Bedeutung, damit das Dichtungsmaterial selbst keine Verunreinigungen hervorruft.

Zurückkommend auf die Darstellungen in Fig. 1 und Fig. 2, ergibt sich, daß das in die Eindrehung 29 eingelegte Ansatzstück 71 des Dichtungsringes 7 die Umfangsfläche der ersten Lagerbuchse 17 gegenüber den benachbarten Dichtungsflächen im Tragschalendoden 11 staubfrei unter der Einwirkung eines Andruckelementes 30 abdichtet, das konzentrisch zur Spindelachse von außen auf den Tragschalenboden 11 aufgesetzt und darauf durch Befestigungsschrauben 31 festgelegt ist.

**Patentansprüche**

1. Gehäuse für einen Magnetplattenspeicher, das in eine Abdeckung (2) und eine Tragschale (1) unterteilt ist, in der ein Plattenstapel (8) beidseitig gelagert und eine Magnetkopfpositioniereinrichtung (10) angeordnet sind, wobei zwischen Tragschale und Abdeckung zum staubfreien Abdichten des Gehäuseinneren eine Dichtung (7) vorgesehen ist und eine der Lagerstellen für den Plattenstapel in einer Seitenwand der Tragschale als zu deren Rand hin geöffneter Schlitz (19) zum Aufnehmen des entsprechenden Plattenstapellagers ausgebildet ist, dadurch gekennzeichnet, daß diese Dichtung (7) als geschlossener, in der Trennebene zwischen Tragschale (1) und Abdeckung (2) eingequetschter Dichtungsring (70) geformt ist und im Bereich des Schlitzes (19) ein abgewinkeltes, halbkreisförmiges Ansatzstück (71) aufweist, das das Plattenstapellager (14, 15, 17) umfassend auf der Außenseite der Seitenwand (11) der Tragschale festgelegt ist.

2. Gehäuse für einen Magnetplattenspeicher nach Anspruch 1, dadurch gekennzeichnet, daß die Dichtung (7) als Spritzgußformteil aus Silikonkunststoff hergestellt ist.

3. Gehäuse für einen Magnetplattenspeicher nach Anspruch 1 oder 2, dadurch gekennzeichnet, daß eine Dichtfläche in der Trennebene zwischen Abdeckung (2) und Tragschale (1) als Stufe ausgebildet ist, bei der durch einen innen liegenden Ansatz (5) ein metallischer Kontakt zwischen Abdeckung und Tragschale zum Abschirmen von hochfrequenten Störsignalen und eine außen liegende Fase (6) zur Aufnahme des Dichtungsringes (7) vorgesehen ist.

4. Gehäuse für einen Magnetplattenspeicher nach einem der Ansprüche 1 bis 3, wobei der Plattenstapel eine Nabe und eine damit fest verbundene Spindel mit Spindelzapfen aufweist, die kugelgelagert in einer ersten bzw. zweiten Lagerbuchse umlaufen und wobei die erste Lagerbuchse in dem Schlitz in der einen Seitenwand der Tragschale festgelegt ist, dadurch gekennzeichnet, daß konzentrisch zum äußeren Umfang der ersten Lagerbuchse (17) in der Außenseite der zugeordneten Seitenwand (11) der Tragschale (1) eine Eindrehung (29) vorgesehen ist, in die das Ansatzstück (71) des Dichtungsringes (7), die Umfangsfläche dieser Lagerbuchse umschließend, eingelegt ist.

5. Gehäuse für einen Magnetplattenspeicher nach Anspruch 4, gekennzeichnet durch ein Andruckelement (30), das konzentrisch zur Achse des Plattenstapels (8), das Ansatzstück (71) des Dichtungsringes (7) überdeckend, auf der Außenseite der zugeordneten Seitenwand (11) der Tragschale (1) festgelegt ist.

**Claims**

1. A housing for a magnetic disc store which is divided into a cover (2) and a supporting shell (1) in which a stack of discs (8) is mounted on two sides and a magnetic head positioning divice (10) is arranged, where a seal (7) is arranged between the supporting shell and the cover in order to provide a dust-free seal of the housing interior and where one of the bearings for the stack of discs in a side wall of the supporting shell consists of a slot (19) which is open towards the edge and which accommodates the corresponding disc stack bearing, characterised in that this seal (7) is in the form of a closed sealing ring (70) which is compressed in the dividing plane between the supporting shell (1) and the cover (2) and the region of the slot (19) is provided with an angled semi-circular shoulder component (21) which is fixed to the exterior of the side wall (11) of the supporting shell so as to embrace the disc stack bearing (14, 15, 17).

2. A housing for a magnetic disc store as claimed in claim 1, characterised in that the seal (7) is produced as an injection moulded component composed of silicon synthetic material.

3. A housing for a magnetic disc store as claimed in claim 1 or 2, characterised in that a sealing surface in the dividing plane between the cover (2) and the supporting shell (1) is in the form of a step, where an internal shoulder (5) forms a metallic contact between the cover and the supporting shell in order to screen highfrequency interference signals, and an external rebate (6) which accommodates the sealing ring (7).

4. A housing for a magnetic disc store as claimed in one of the claims 1 to 3, where the stack of discs comprises a hub to which is permanently connected a spindle with spindle pins which rotate, mounted in ball bearings, in first and second bearing bushes respectively, and where the first bearing bush is attached in the slot in the first side wall of the supporting shell, characterised in that concentrically with the outer periphery of the first bearing bush (17), in the exterior of the assigned side wall (11) of the supporting shell (1) a recess (29) is provided into which the shoulder component (71) of the sealing ring (7) is inserted, surrounding the peripheral surface of this bearing bush.

5. A housing for a magnetic disc store as claimed in claim 4, characterised by a pressure element (30) which is attached to the exterior of the assigned side wall (11) of the supporting shell (1) concentrically with the axis of the stack of discs (8) and covering the shoulder component (71) of the sealing ring (7).

**Revendications**

1. Boîtier pour une mémoire à disques magnétiques, qui est subdivisée en un capot (2) et une coque de support (1) dans laquelle est disposée une pile de disques (8) supportée sur ses deux côtés, et un dispositif (10) de positionnement des têtes magnétiques, et dans lequel une garniture d'étanchéité (7) est prévue entre la coque de support et le capot de manière à réaliser une fermeture, étanche à la poussière, de l'intérieur du boîtier, et l'un des points de support pour la pile de disques dans une paroi latérale de la coque de support est réalisé sous la forme d'une fente (19) qui s'ouvre en direction du bord de la coque et sert à recevoir le support correspondant de la pile de disques, caractérisé par le fait que cette garniture d'étanchéité (7) est conformée à la manière d'une bague d'étanchéité fermée (70), comprimée dans le plan de séparation entre la coque de support (1) et le capot (2), et possède, au voisinage de la fente (19), une partie saillante coudée semi-circulaire (71), qui est fixée sur la face extérieure de la paroi latérale (11) de la coque de support, de manière à entourer le support (14, 15, 17) de la pile de disques.

2. Boîtier pour une mémoire à disques magnétiques suivant la revendication 1, caractérisé par le fait que la garniture d'étanchéité (7) est réalisée sous la forme d'une pièce moulée par injection en une matière platique au silicone.

3. Boîtier pour une mémoire à disques magnétiques suivant la revendication 1 ou 2, caractérisé par le fait qu'une surface d'étanchéité est formée, dans le plan de séparation entre le capot (2) et la coque de support (1), sous la forme d'une partie étagée, au niveau de laquelle un contact métallique est prévu, grâche à la présence d'une partie saillante intérieure (5), entre le capot et la coque de support de manière à réaliser une protection vis-à-vis de signaux parasites à haute fréquence, et qu'il est prévu un chanfrein extérieur (6) servant à recevoir la bague d'étanchéité (7).

4. Boîtier pour une mémoire à disques magnétiques suivant l'une des revendications 1 à 3, dans laquelle la pile de disques comporte un moyeu et une broche, reliée rigidement à ce moyeu et comportant des pivots qui circulent, en étant supportés par des billes, dans un premier et un second coussinets de palier, et dans lequel le premier coussinet de palier est fixé dans la fente ménagée dans une paroi latérale de la coque de support, caractérisé par le fait qu'il est prévu, concentriquement au pourtour extérieur du premier coussinet de palier (17), dans la face extérieure de la paroi latérale associée (11) de la coque de support (1), une gorge usinée au tour (29), dans laquelle la partie saillante (71) de la bague d'étanchéité (7) est insérée de manière à entourer la surface périphérique de ce coussinet de palier.

5. Boîtier pour une mémoire à disques magnétiques suivant la revendication 4, caractérisé par un organe de compression (30), qui est fixé, d'une manière concentrique à la pile de disques (8), sur la face extérieure de la paroi latérale associée (11) de la coque de support (1), de manière à recouvrir la partie saillante (71) de la bague d'étanchéité (7).

FIG 1

# FIG 2

# FIG 3